# FASCICULE DE BREVET EUROPEEN

(11) **EP 0 850 795 B1**
(45) Date de publication et mention de la délivrance du brevet: **11.07.2001**
(21) Numéro de dépôt: 97403018.1
(22) Date de dépôt: 12.12.1997
(51) Int. Cl.: B60K 7/00, B60K 17/04

(54) **Dispositif d'entraînement d'une roue d'un véhicule automobile comportant un agencement particulier d'un moteur et d'un réducteur de vitesse**
Antriebsvorrichtung für ein Kraftfahrzeugrad mit einer besonderen Anordnung von Motor und Untersetzungsgetriebe
Driving device for automotive vehicle wheel provided with special arrangement of motor and speed reducer

(30) Priorité: 23.12.1996 FR 9615898
(43) Date de publication de la demande: 01.07.1998
(73) Titulaire: Renault VI, 69431 Lyon Cedex 03 (FR)
(72) Inventeur: Thomas, Michel, 69800 Saint Priest (FR)
(74) Mandataire: Fernandez, Francis

(56) Documents cités:
- EP-A- 0 401 511
- EP-A- 0 525 663
- CH-A- 369 974
- DE-C- 4 317 536
- GB-A- 2 156 475

## Description

L'invention concerne un dispositif d'entraînement d'une roue d'un véhicule automobile comportant un agencement particulier d'un moteur et d'un réducteur de vitesse.

L'invention concerne plus particulièrement un dispositif d'entraînement d'une roue d'un véhicule automobile, du type dans lequel la roue est montée à rotation autour de son axe à l'extrémité externe de moyens de liaison avec un châssis du véhicule, du type comportant un moteur dont un carter est solidaire de moyens de liaison de la roue avec le châssis, et du type dans lequel un réducteur de vitesse transmet la puissance motrice entre le moteur et la roue.

Une telle conception des moyens d'entraînement du véhicule conduit à munir généralement plusieurs roues d'un tel module d'entraînement, mais elle permet d'éviter l'implantation d'un moteur principal dont la puissance doit être distribuée par exemple par le biais d'arbres de transmission.

Il est ainsi possible de s'affranchir des contraintes d'encombrement qui sont liées d'une part à l'implantation du moteur principal et, d'autre part, à l'implantation des organes de transmission.

Lorsque le moteur d'un tel dispositif d'entraînement est un moteur électrique, il est généralement nécessaire de prévoir un réducteur de vitesse présentant un fort rapport de réduction, ce qui permet d'utiliser des moteurs tournant à haute vitesse, et ainsi d'obtenir un rapport entre l'encombrement du moteur et la puissance qu'il délivre particulièrement favorable.

Un tel dispositif d'entraînement est décrit et représenté dans le document EP-A-0.525.663. Ainsi, le module d'entraînement comporte un moteur électrique qui est agencé entre les bras d'une suspension, du côté interne de la roue qu'il est destiné à entraîner.

L'arbre de sortie du moteur s'étend axialement vers l'extérieur en direction du réducteur de vitesse qui est logé à l'intérieur d'un espace délimité par la jante de la roue.

Cet agencement du dispositif d'entraînement présente l'inconvénient d'être relativement encombrant selon la direction de l'axe de la roue de sorte que, si les deux roues d'un même essieu d'un véhicule sont équipées de tels dispositifs d'entraînement, l'espace libre entre les deux roues se trouve très fortement diminué.

Or, dans un véhicule automobile, on cherche le plus souvent à ce que l'espace utile prévu pour les passagers ou pour les objets transportés par le véhicule soit le plus important possible, et agencé le plus bas possible par rapport à l'axe de rotation des roues, à la fois pour des raisons d'accessibilité et pour des raisons d'abaissement du centre de gravité du véhicule lorsqu'il est chargé.

EP-A-401 511 divulgue un dispositif d'entraînement d'une roue selon le préambule de la revendication 1. Ce dispositif comporte un moteur et un réducteur de vitesse partiellement reçus à l'intérieur de la jante de la roue. Le réducteur de vitesse comporte une transmission avec deux trains épicycloïdals.

L'invention a pour objet de proposer une nouvelle conception d'un dispositif d'entraînement d'une roue motrice qui permette de limiter fortement l'encombrement du dispositif selon la direction axiale de la roue, au bénéfice du volume utile disponible pour l'utilisateur.

Dans ce but, l'invention propose un dispositif d'entraînement du type décrit précédemment, caractérisé en ce que, selon la direction de l'axe de la roue, le moteur est agencé du côté externe du réducteur de vitesse et le réducteur de vitesse est interposé axialement entre le moteur et les moyens de liaison de la roue avec le châssis.

Selon d'autres caractéristiques de l'invention :
- une face transversale externe du carter du moteur est agencée axialement sensiblement au niveau d'un flanc latéral externe de la roue ;
- le moteur est au moins partiellement reçu à l'intérieur d'un espace délimité par une jante de la roue ;
- le réducteur de vitesse est au moins partiellement reçu à l'intérieur d'un espace délimité par une jante de la roue ;
- le réducteur de vitesse comporte deux étages d'entrée et de sortie formés chacun d'un train épicycloïdal comportant un planétaire, un porte-satellites et une couronne externe ;
- le carter du moteur est solidaire de la couronne externe de l'étage d'entrée du réducteur et du porte-satellites de l'étage de sortie qui sont des organes fixes, un arbre moteur du moteur est relié à un planétaire de l'étage d'entrée du réducteur, le porte-satellites de l'étage d'entrée est relié au planétaire de l'étage de sortie, et la couronne externe de l'étage de sortie est reliée à la roue ;
- un organe fixe du réducteur est solidaire des moyens de liaison de la roue avec le châssis ;
- la roue est montée à rotation sur un organe fixe du réducteur par l'intermédiaire d'un montage à roulements ;
- le réducteur de vitesse comporte un corps fixe intermédiaire qui est monté axialement entre deux corps fixes externe et interne, et les deux étages d'entrée et de sortie du réducteur sont agencés axialement chacun entre le corps fixe intermédiaire et, respectivement, le corps fixe externe et le corps fixe interne ;
- le corps fixe externe comporte un flasque transversal sur une face externe duquel est fixé le carter du moteur et au travers duquel le planétaire de l'étage d'entrée est monté à rotation, et il comporte une paroi cylindrique périphérique, qui s'étend axialement vers l'intérieur depuis la périphérie du flasque transversal, à l'intérieur de laquelle est fixée la couronne de l'étage d'entrée, et à une extrémité interne de laquelle est fixé le corps intermédiaire ;
- le porte-satellites de l'étage d'entrée et le planétaire de l'étage de sortie sont reliés par un arbre de liaison qui est monté à rotation au travers du corps intermédiaire ;
- le corps intermédiaire porte, sur une face externe, les satellites de l'étage de sortie ;
- la roue comporte un moyeu qui est monté à rotation sur la paroi cylindrique périphérique du corps fixe externe, et la couronne de l'étage de sortie est solidaire du moyeu ;
- le corps fixe interne comporte un flasque transversal sur une face interne duquel sont fixés les moyens de liaison de la roue avec le châssis ;
- un disque de frein est solidaire de la roue et est décalé axialement vers l'intérieur par rapport la roue ;
- le corps fixe interne comporte un flasque transversal sur une face interne duquel est agencé le carter d'un dispositif de freinage comportant au moins un disque fixe en rotation lié au carter et un disque mobile en rotation lié à un arbre qui est solidaire en rotation du planétaire de l'étage de sortie du réducteur, et en ce que les disques sont serrés axialement par des moyens d'actionnement pour provoquer un freinage de la roue ; et
- le moteur est un moteur électrique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un essieu de véhicule automobile reliant deux roues munies chacune d'un dispositif d'entraînement conforme aux enseignements de l'invention ;
- la figure 2 est une vue en coupe axiale partielle d'un dispositif d'entraînement conforme aux enseignements de l'invention ; et
- la figure 3 est une vue de détail de la figure 2 illustrant plus particulièrement le réducteur de vitesse du dispositif d'entraînement.

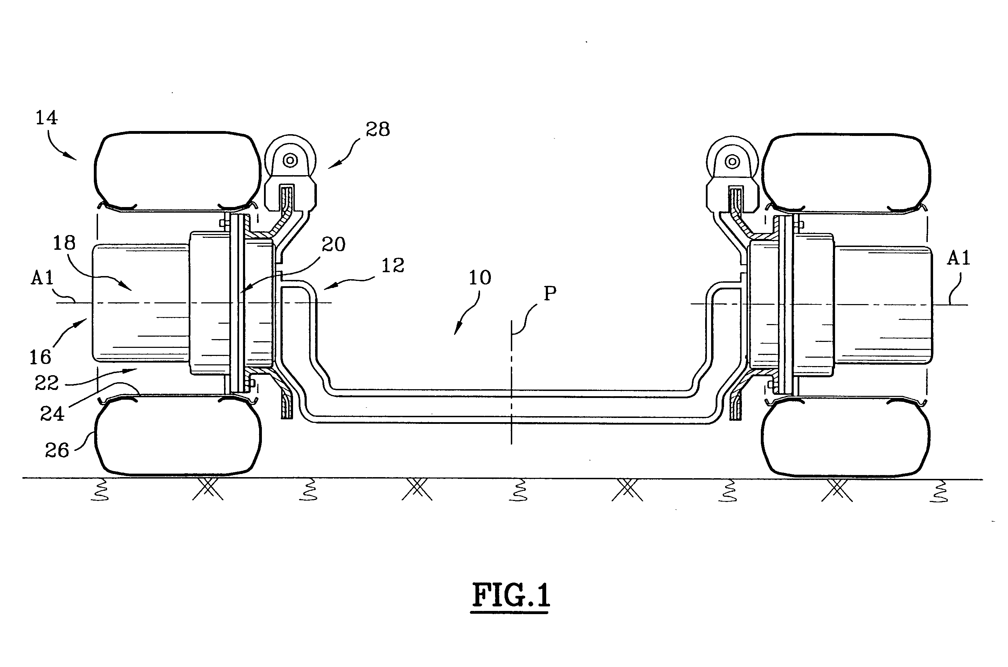

On a représenté sur la figure 1 un essieu 10 de véhicule automobile (non représenté) à chacune des extrémités externes duquel est agencée une roue 14 qui est entraînée en rotation autour de son axe A1 perpendiculaire à un plan longitudinal vertical médian P du véhicule par un dispositif d'entraînement 16 conforme aux enseignements de l'invention.

Le dispositif d'entraînement 16 comporte essentiellement un moteur électrique 18 et un réducteur de vitesse 20 interposé entre le moteur 18 et la roue 14. Grâce aux enseignements de l'invention, le dispositif d'entraînement 16 est particulièrement compact et est presque entièrement reçu à l'intérieur d'un espace 22 délimité par une jante 24 de la roue 14 sur laquelle est monté un pneumatique 26.

Comme on peut le voir particulièrement sur cette figure 1, l'agencement du dispositif d'entraînement 16 selon l'invention permet de dégager un volume particulièrement important entre les roues 14 de l'essieu 10, volume qui peut être entièrement consacré aux passagers ou aux objets destinés à être transportés par le véhicule.

Par ailleurs, l'agencement selon l'invention permet d'agencer un dispositif de freinage 28 de manière à ce que son refroidissement puisse être réalisé dans des conditions optimales pour garantir l'efficacité du freinage.

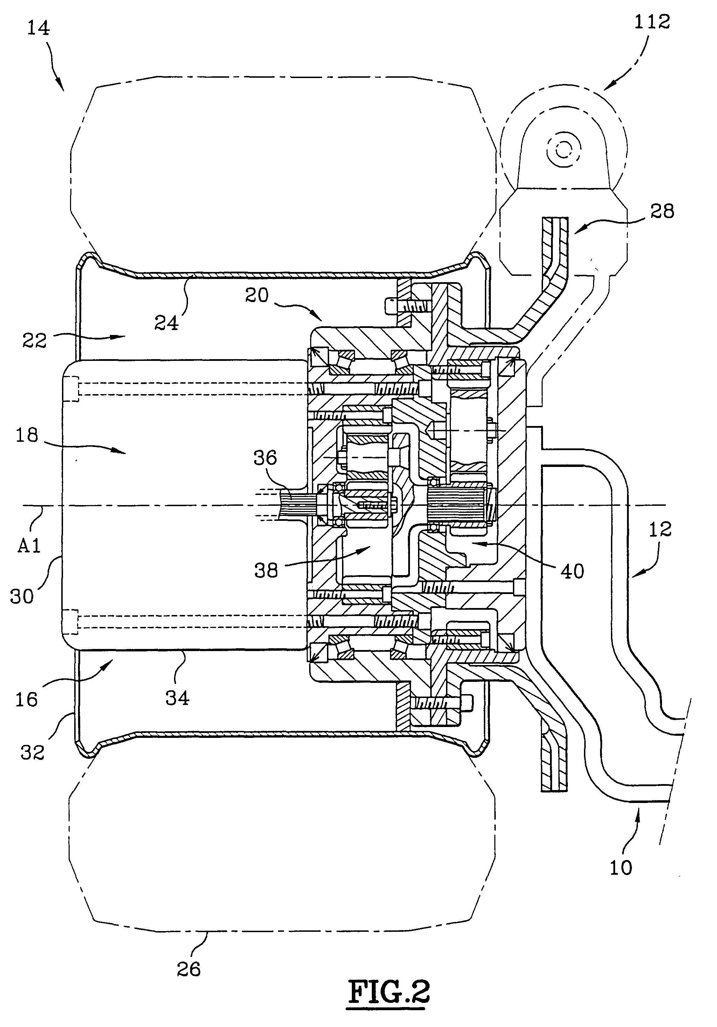

Le dispositif d'entraînement 16 de la roue 14 est plus particulièrement représenté sur la figure 2. Comme on peut le voir sur cette figure, le réducteur de vitesse 20 est interposé selon la direction de l'axe A1 de la roue 14 entre l'extrémité 12 de l'essieu 10 et le moteur 18. Ce dernier se retrouve donc rejeté axialement vers l'extérieur et il est possible de l'agencer le plus possible vers l'extérieur.

Ainsi, une face transversale externe 30 du moteur 18 peut être agencée à l'aplomb d'un flanc latéral externe 32 de la roue 14 ou sensiblement à l'aplomb d'un élément de carrosserie externe du véhicule.

Le moteur 18 comporte un carter fixe 34 qui est fixé du côté externe du réducteur 20 tandis que l'extrémité 12 de l'essieu 10 est fixée du côté interne de ce réducteur 20.

Le moteur 18 est ainsi agencé de telle sorte que son arbre de sortie 36 soit dirigé axialement vers l'intérieur en direction du plan longitudinal médian P du véhicule.

Le réducteur 20 est du type à trains épicycloïdaux et comporte deux étages d'entrée 38 et de sortie 40 qui permettent d'obtenir un rapport de réduction important, qui peut atteindre une valeur quelconque entre 10 et 50 par exemple, permettant ainsi d'utiliser des moteurs électriques 18 relativement petits mais tournant rapidement pour fournir une puissance suffisante à l'entraînement du véhicule.

Le réducteur 20 comporte une série d'organes fixes qui sont solidaires de l'essieu 10 et du carter 34 du moteur 18, et une série d'organes mobiles qui transmettent la puissance motrice fournie par l'arbre moteur 36 du moteur 18 vers la roue 14.

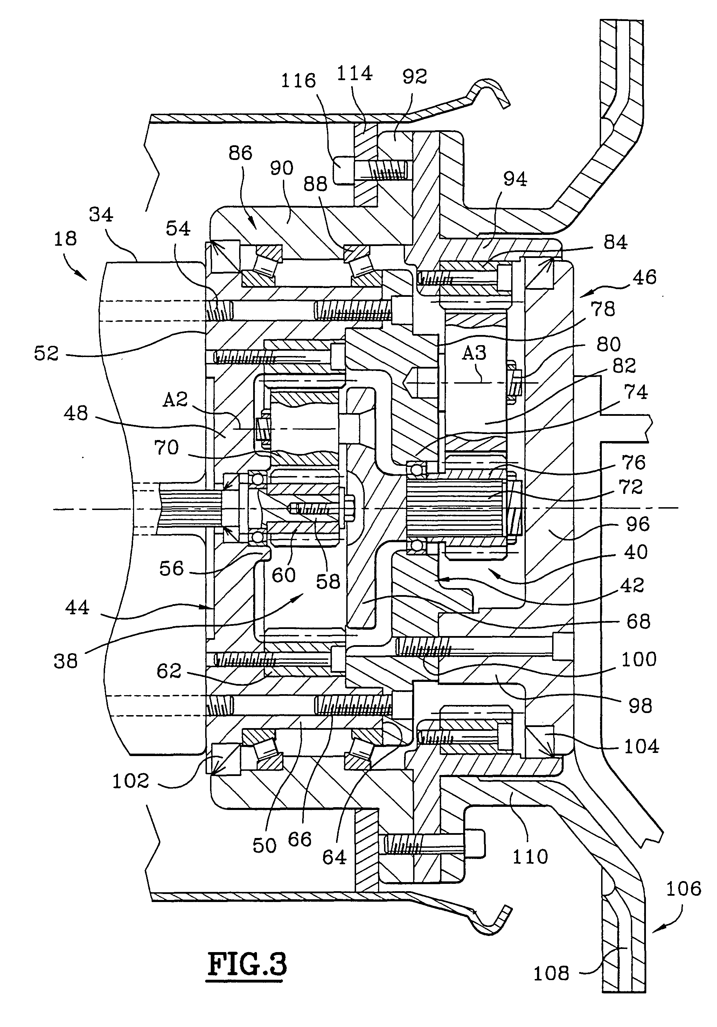

Le réducteur de vitesse 20 est représenté plus en détail à la figure 3.

Le réducteur 20 comporte trois corps fixes : un corps intermédiaire 42 qui est interposé axialement entre deux corps externe 44 et interne 46 auxquels sont reliés respectivement le moteur 18 et l'extrémité 12 de l'essieu 10.

Le corps fixe externe 44 comporte essentiellement un flasque transversal 48 et une paroi cylindrique 50 qui s'étend axialement vers l'intérieur en direction du plan longitudinal médian P du véhicule depuis la périphérie du flasque transversal 48.

Le carter 34 du moteur 18 est fixé contre une face transversale externe 52 du flasque 48, par exemple au moyen d'une série de vis 54. L'arbre moteur 36 du moteur 18 est monté à rotation dans un palier 56 qui est agencé axialement au centre du flasque 38, et son extrémité libre 58, qui s'étend du côté interne du flasque transversal 48, porte un pignon 60 qui forme un planétaire pour le train épicycloïdal du premier étage 38 du réducteur 20.

La paroi cylindrique périphérique 50 du corps fixe externe 44 porte, sur une face interne, une couronne dentée 62 qui forme la couronne externe du premier étage 38 du réducteur 20.

Le corps intermédiaire 42 est fixé contre l'extrémité axiale interne 64 de la paroi cylindrique 50 au moyen de vis 66.

De manière connue, des pignons 70 formant les satellites du premier étage 38 du réducteur 20 engrènent simultanément avec le planétaire 60 et avec la couronne externe 62 et sont montés à rotation autour de leur axe A2, parallèle à l'axe A1 du moteur 18 et du réducteur 20, sur un porte-satellites 68 qui est agencé axialement entre les satellites 70 et le corps intermédiaire 42 et qui est monté à rotation autour de l'axe A1 par rapport au corps intermédiaire 42.

A cet effet, le porte-satellites 68 comporte un arbre de liaison 72 qui s'étend axialement vers l'intérieur au travers d'un palier 74 du corps intermédiaire 42, et dont l'extrémité libre porte un pignon 76 formant le planétaire du deuxième étage 40 du réducteur 20.

Par ailleurs, le corps intermédiaire 42 porte sur sa face interne 78 des tiges d'articulation 80 qui s'étendent axialement vers l'intérieur et sur lesquelles des pignons 82 qui forment les satellites du second étage 40 sont montés à rotation autour de leur axe A3, parallèle à l'axe A1.

Les satellites 82 sont destinés à coopérer avec une couronne à denture interne 84 qui forme la couronne externe du second étage de transmission et qui est solidaire d'un moyeu 86 de la roue 14.

Le moyeu 86 est monté à rotation par l'intermédiaire de deux roulements 88 à rouleaux coniques sur la paroi cylindrique périphérique 50 du corps fixe externe du réducteur 20. Le moyeu 86 comporte un manchon cylindrique 90 d'axe A1 à l'extrémité axiale interne duquel s'étend un collet radial externe 92.

La couronne externe 84 est montée sur un support 94 qui est lui-même rapporté contre une face transversale interne du collet radial 92 du moyeu 86. Le support 94 comporte un manchon tubulaire d'axe A1 à une extrémité axiale externe duquel est agencé un collet radial externe pour sa liaison avec le collet radial externe 92 du moyeu 86. La couronne 84 est agencée à l'intérieur du manchon.

La couronne externe 84 est donc montée à rotation par rapport aux organes fixes du réducteur 20 que sont les corps fixes interne 44, intermédiaire 42 et externe 46, et elle constitue ainsi l'organe de sortie du réducteur 20.

Le corps fixe externe 46 comporte essentiellement un flasque transversal interne 96 qui délimite le réducteur 20 axialement du côté interne et qui est fixé sur le corps fixe intermédiaire 42 par l'intermédiaire de plots 98 qui s'étendent axialement vers l'extérieur pour venir en appui contre la face interne 78 du corps intermédiaire 42, et qui sont traversés par des vis axiales de liaison 100.

Le moyeu 86 et le support 94 de la couronne 84 délimitent radialement vers l'extérieur le réducteur 20 qui est par ailleurs délimité axialement par les flasques transversaux 48, 96 des corps fixes interne 44 et externe 46. Des joints d'étanchéité à lèvre 104, portés respectivement par les corps interne 44 et externe 46, sont prévus pour coopérer avec le moyen 86 et le support 94, pour fermer de manière étanche le réducteur 20.

L'extrémité 12 de l'essieu 10 est fixée de manière représentée contre une face externe du flasque 96. La jante 24 comporte un voile transversal 114 qui est destiné à être centré sur l'extérieur du manchon 90 du moyeu 86 et qui est destiné à être fixé en appui contre le collet radial 92 au moyen de vis 116.

Dans un exemple de réalisation d'un tel réducteur, il est par exemple possible d'obtenir un rapport de réduction du premier étage de 4,8 et un rapport de réduction de 4,68, ce qui représente un rapport de réduction total pour le réducteur 20 de 22,5. Un tel rapport de réduction permet d'utiliser des moteurs électriques dont le régime nominal est de l'ordre de 10.000 tours/min.

En fonctionnement, l'arbre moteur 36 qui entraîne le planétaire 60 du premier étage de réduction 38 provoque la rotation des satellites 70 du premier étage et, la couronne 62 du premier étage étant fixe, le porte-satellites 68 est ainsi entraîné en rotation autour de l'axe A1. Il entraîne ainsi le planétaire 76 du second étage 40 qui engrène avec les satellites 82. Les axes A3 de ces satellites 82 étant fixes, ils provoquent la rotation de la couronne 84 autour de l'axe A1, en sens inverse par rapport au porte-satellites 68 et à l'arbre moteur 36.

Comme on peut le voir sur les figures, le dispositif d'entraînement 16 comportant un moteur 18 et un réducteur 20 s'étend axialement sur une largeur à peine supérieure à celle de la roue 14.

Selon un autre aspect de l'invention, un disque de frein 106, en l'occurrence muni de canaux de ventilation sensiblement radiaux 108 est monté solidaire du moyeu 86 de la roue 14.

A cet effet, le disque de frein 106 comporte une portion de fixation 110 qui s'étend vers l'extérieur et qui est destiné à être centrée sur le manchon du support 94 et à être fixé axialement contre le collet radial externe de celui-ci.

Comme on peut le voir plus particulièrement sur la figure 2, un étrier de frein 112 est destiné à coopérer avec le disque de frein 106 et est fixé sur la face externe du flasque transversal 96 du corps fixe interne 46.

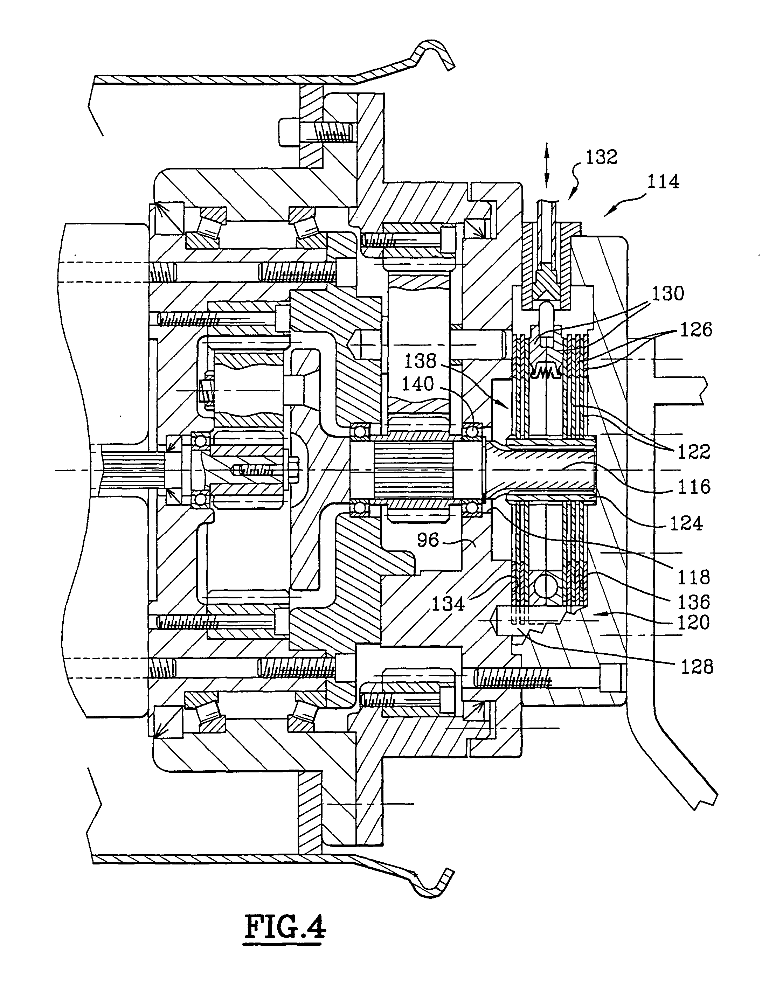

On a représenté sur la figure 4 un deuxième mode de réalisation des moyens de freinage associés au dispositif d'entraînement selon l'invention.

En effet, le dispositif de freinage 114 représenté sur cette figure comporte une série de disques qui sont empilés axialement et qui sont, alternativement, fixes en rotation ou liés en rotation avec un arbre sortant 116 qui prolonge axialement le l'arbre de liaison 72 et le planétaire 76 de l'étage de sortie 40 du réducteur 20. L'arbre sortant 116 s'étend vers l'intérieur au travers d'un orifice central 118 du flasque transversal 96 du corps intermédiaire 42 pour être reçu à l'intérieur d'un carter 120 en forme de cloche du dispositif de freinage 114 qui est fixé sur la face interne du flasque 96 et dans lequel sont agencés les disques.

Les disques mobiles 122 sont montés à coulissement axial sur une douille tubulaire 124 qui comporte des cannelures sur ses surfaces cylindriques interne et externe et qui est elle-même montée sur une extrémité cannelée de l'arbre sortant 116. La douille 124 assure la montabilité de l'ensemble.

Les disques fixes 126, en forme d'anneaux, sont guidés axialement et immobilisés radialement sur des plots axiaux 128 qui sont reçus dans des encoches pratiquées dans la périphérie radiale externe des disques 126.

Deux plateaux annulaires 130 sont interposés axialement dans l'empilement pour le séparer en deux parties. Les deux plateaux 130 sont destinés à être écartés axialement l'un de l'autre par des moyens d'actionnement 132 pour solliciter chacune des deux parties de l'empilement de disques contre deux faces transversales 134, 136 en regard l'une de l'autre formées respectivement sur le flasque transversal 96 et sur le carter 120 du dispositif 114.

On provoque ainsi un frottement important entre les disques fixes 126 et mobiles 122, ce qui permet de freiner efficacement l'arbre sortant 116 et, par conséquent, le réducteur 20, le moteur 16 et la roue 14.

L'empilement des disques 122, 126 est agencé de manière que deux disques fixes 126 soient respectivement au contact des faces transversales 134, 136 et que les deux plateaux 130 coopèrent avec les disques mobiles 122.

Le carter 120 et le flasque transversal 96 délimite une cavité étanche 138 dans laquelle les disques 122, 126 sont au moins en partie immergés dans un bain d'huile qui permet d'en améliorer le refroidissement. Éventuellement, il est possible d'organiser une circulation de l'huile entre la cavité 138 et un organe externe (non représenté), par exemple dans le but de refroidir l'huile dans un échangeur de chaleur.

De manière avantageuse, on utilisera pour le dispositif de freinage 114 la même huile que celle qui assure la lubrification des trains épicycloïdaux 38, 40 du réducteur 20 de manière à pouvoir simplifier la réalisation de l'étanchéité autour de l'arbre sortant 116 au niveau de l'orifice central 118 du flasque 96 dans lequel l'arbre 116 est guidé en rotation par un roulement à billes 140.

Les moyens de liaison de la roue 14 au châssis, tels que l'essieu 10, peuvent être fixés sur le carter 120 du dispositif de freinage 114.

Un tel dispositif de freinage 114 est particulièrement avantageux dans la mesure où il permet d'obtenir une grande puissance de ralentissement tout en ayant un faible encombrement diamétral. En l'occurrence, le dispositif de freinage 114 est d'un diamètre légèrement inférieur à celui du réducteur 20.

Par ailleurs, le dispositif 114 à bain d'huile permet de dissiper de manière très efficace l'énergie calorifique dégagée lors du freinage.

Toutefois, le rendement global de ce dispositif n'est optimal que si les disques mobiles 122 sont entraînés en moyenne à une vitesse suffisamment importante.

Or, grâce à la conception du dispositif d'entraînement selon l'invention, il est possible de lier les disques libres 122 en rotation non pas directement avec la roue 14, comme dans le cas du frein à disque, mais avec un élément du réducteur dont la vitesse de rotation est par exemple 4 à 5 fois supérieure. L'agencement du réducteur 20 du côté interne du dispositif d'entraînement permet de le relier l'arbre sortant 116 de manière particulièrement simple au dispositif de freinage 114.

## Revendications

1. Dispositif d'entraînement d'une roue d'un véhicule automobile, du type dans lequel la roue (14) est montée à rotation autour de son axe (A1) à l'extrémité externe (12) de moyens de liaison (10) avec un châssis du véhicule, du type comportant un moteur (18) dont un carter (34) est solidaire des moyens de liaison (10) de la roue (14) avec le châssis, et du type dans lequel un réducteur de vitesse (20) qui transmet la puissance motrice entre le moteur (18) et la roue (14) comporte deux étages d'entrée (38) et de sortie (40) formés chacun d'un train épicycloïdal comportant un planétaire, un porte-satellites et une couronne externe de telle sorte que le moteur (18) et le réducteur de vitesse (20) sont au moins partiellement reçus à l'intérieur d'un espace (22) délimité par une jante (24) de la roue (14) caractérisé en ce que le moteur (18) est agencé du côté externe, selon la direction de l'axe (A1), du réducteur de vitesse (20) qui est interposé axialement entre le moteur (18) et les moyens de liaison (10) de la roue (14) avec le châssis.

2. Dispositif d'entraînement selon la revendication 1, caractérisé en ce que le carter (34) du moteur (18) est solidaire de la couronne externe (62) de l'étage d'entrée (38) du réducteur (20) et du porte-satellites (42) de l'étage de sortie (40) qui sont des organes fixes, en ce qu'un arbre moteur (36) du moteur (18) est relié à un planétaire (60) de l'étage d'entrée (38) du réducteur (20), en ce que le porte-satellites (68) de l'étage d'entrée (38) est relié au planétaire (76) de l'étage de sortie (40), et en ce que la couronne externe (84) de l'étage de sortie (40) est reliée à la roue (14).

3. Dispositif d'entraînement selon l'une quelconque des revendications 1 ou 2, caractérisé en ce qu'un organe fixe (46) du réducteur (20) est solidaire des moyens de liaison (10) de la roue (14) avec le châssis.

4. Dispositif d'entraînement selon l'une quelconque des revendications précédentes, caractérisé en ce que la roue (14) est montée à rotation sur un organe fixe (44) du réducteur (20) par l'intermédiaire d'un montage à roulements (88).

5. Dispositif d'entraînement selon l'une quelconque des revendications précédentes, caractérisé en ce que le réducteur de vitesse (20) comporte un corps fixe intermédiaire (42) qui est monté axialement entre deux corps fixes externe (44) et interne (46), et en ce que les deux étages d'entrée (38) et de sortie (40) du réducteur (20) sont agencés axialement chacun entre le corps fixe intermédiaire (42) et, respectivement, le corps fixe externe (44) et le corps fixe interne (46).

6. Dispositif d'entraînement selon la revendication 5, caractérisé en ce que le corps fixe externe (44) comporte un flasque transversal (48) sur une face externe (52) duquel est fixé le carter (34) du moteur (18) et au travers duquel le planétaire (60) de l'étage d'entrée (38) est monté à rotation, et en ce qu'il comporte une paroi cylindrique périphérique (50), qui s'étend axialement vers l'intérieur depuis la périphérie du flasque transversal (48), à l'intérieur de laquelle est fixée la couronne (62) de l'étage d'entrée (38), et à une extrémité interne (64) de laquelle est fixé le corps intermédiaire (42).

7. Dispositif d'entraînement selon l'une des revendications 5 ou 6, caractérisé en ce que le porte-satellites (68) de l'étage d'entrée (38) et le planétaire (76) de l'étage de sortie (40) sont reliés par un arbre de liaison (72) qui est monté à rotation au travers du corps intermédiaire (42).

8. Dispositif d'entraînement selon l'une quelconque des revendications 5 à 7, caractérisé en ce que le corps intermédiaire (42) porte, sur une face externe (78), les satellites (72) de l'étage de sortie (40).

9. Dispositif d'entraînement selon l'une quelconque des revendications 6 à 8, caractérisé en ce que la roue (14) comporte un moyeu (86) qui est monté à rotation sur la paroi cylindrique périphérique (50) du corps fixe externe (44), et en ce que la couronne (84) de l'étage de sortie (40) est solidaire du moyeu (86).

10. Dispositif d'entraînement selon l'une quelconque des revendications 5 à 9, caractérisé en ce que le corps fixe interne (46) comporte un flasque transversal (96) sur une face interne duquel sont fixés les moyens de liaison (12) de la roue (14) avec le châssis.

11. Dispositif d'entraînement selon l'une quelconque des revendications précédentes, caractérisé en ce qu'un disque de frein (28) est solidaire de la roue (14) et est décalé axialement vers l'intérieur par rapport la roue (14).

12. Dispositif d'entraînement selon l'une quelconque des revendications 5 à 9, caractérisé en ce que le corps fixe interne (46) comporte un flasque transversal (96) sur une face interne duquel est agencé le carter (120) d'un dispositif de freinage (114) comportant au moins un disque (126) fixe en rotation lié au carter (120) et un disque (122) mobile en rotation lié à un arbre (116) qui est solidaire en rotation du planétaire (76) de l'étage de sortie (40) du réducteur (20), et en ce que les disques (122, 126) sont serrés axialement par des moyens d'actionnement (130, 132) pour provoquer un freinage de la roue (14).

13. Dispositif d'entraînement selon l'une quelconque des revendications précédentes, caractérisé en ce que le moteur (18) est un moteur électrique.

14. Dispositif d'entraînement selon l'une quelconque des revendications précédentes, caractérisé en ce qu'une face transversale externe (30) du carter (34) du moteur (18) est agencée axialement sensiblement au niveau d'un flanc latéral externe (32) de la roue (14).

## Patentansprüche

1. Antriebsvorrichtung für ein Rad eines Automobils, von dem Typ, in dem das Rad (14) drehbar um seine Achse (A1) am äußeren Ende (12) der Verbindungsmittel (10) mit einem Fahrgestell montiert ist, von dem Typ, der einen Motor (18) umfasst, dessen Gehäuse (34) fest mit den Mitteln (10) zur Verbindung des Rades (14) mit dem Fahrgestell verbunden ist, und von dem Typ, in dem ein Untersetzungsgetriebe (20), das die Antriebsleistung zwischen dem Motor (18) und dem Rad (14) überträgt, zwei Stufen, nämlich eine Eingangsstufe (38) und eine Ausgangsstufe (40) umfasst, die jeweils durch einen Umlaufgetriebezug, umfassend ein Zentralrad, einen Planetenradträger und einen äußeren Kranz, gebildet werden, so dass der Motor (18) und das Untersetzungsgetriebe (20) zumindest teilweise im Inneren eines Raumes (22) untergebracht sind, der von einer Felge (24) des Rades (14) begrenzt ist, dadurch gekennzeichnet, dass der Motor (18) an der Außenseite, in der Richtung der Achse (A1), des Untersetzungsgetriebes (20) angeordnet ist, das axial zwischen dem Motor (18) und den Mittel (10) zur Verbindung des Rades (14) mit dem Fahrgestell angeordnet ist.

2. Antriebsvorrichtung nach Anspruch 1, dadurch gekennzeichnet, dass das Gehäuse (34) des Motors (18) fest mit dem äußeren Kranz (62) der Eingangsstufe (38) des Untersetzungsgetriebes (20) und dem Planetenradträger (42) der Ausgangsstufe (40) verbunden ist, die fixe Organe sind, dass eine Antriebswelle (36) des Motors (18) mit einem Zentralrad (60) der Eingangsstufe (38) des Untersetzungsgetriebes (20) verbunden ist, dass der Planetenradträger (68) der Eingangsstufe (38) mit dem Zentralrad (76) der Ausgangsstufe (40) verbunden ist und dass der äußere Kranz (84) der Ausgangsstufe (40) mit dem Rad (14) verbunden ist.

3. Antriebsvorrichtung nach einem der Ansprüche 1 oder 2, dadurch gekennzeichnet, dass ein fixes Organ (46) des Untersetzungsgetriebes (20) fest mit den Mitteln (10) zur Verbindung des Rades (14) mit dem Fahrgestell verbunden ist.

4. Antriebsvorrichtung nach einem der vorherigen Ansprüche, dadurch gekennzeichnet, dass das Rad (14) unter Zwischenschaltung einer Lageranordnung (88) drehbar an einem fixen Organ (44) des Untersetzungsgetriebes (20) montiert ist.

5. Antriebsvorrichtung nach einem der vorherigen Ansprüche, dadurch gekennzeichnet, dass das Untersetzungsgetriebe (20) einen fixen Zwischenkörper (42) umfasst, der axial zwischen zwei fixen Körpern, einem äußeren (44) und einem inneren (46), montiert ist, und dass die Eingangsstufe (38) und die Ausgangsstufe (40) des Untersetzungsgetriebes (20) axial zwischen dem fixen Zwischenkörper (42) und dem äußeren fixen Körper (44) bzw. dem inneren fixen Körper (46) angeordnet sind.

6. Antriebsvorrichtung nach Anspruch 5, dadurch gekennzeichnet, dass der äußere fixe Körper (44) eine Querplatte (48) umfasst, an deren Außenfläche (52) das Gehäuse (34) des Motors (18) befestigt ist und durch die hindurch das Zentralrad (60) der Eingangsstufe (38) drehbar montiert ist, und dass er eine periphere zylindrische Wand (50) umfasst, die sich ausgehend von der Peripherie der Querplatte (48) axial nach innen erstreckt, in deren Inneren der Kranz (62) der Eingangsstufe (38) befestigt ist, und an deren innerem Ende (64) der Zwischenkörper (42) befestigt ist.

7. Antriebsvorrichtung nach einem der Ansprüche 5 oder 6, dadurch gekennzeichnet, dass der Planetenradträger (68) der Eingangsstufe (38) und das Zentralrad (76) der Ausgangsstufe (40) durch eine Verbindungswelle (72) verbunden sind, die drehbar durch den Zwischenkörper (42) hindurchgehend montiert ist.

8. Antriebsvorrichtung nach einem der Ansprüche 5 bis 7, dadurch gekennzeichnet, dass der Zwischenkörper (42) an einer Außenfläche (78) die Planetenräder (72) der Ausgangsstufe (40) trägt.

9. Antriebsvorrichtung nach einem der Ansprüche 6 bis 8, dadurch gekennzeichnet, dass das Rad (14) eine Nabe (86) umfasst, die drehbar an der peripheren zylindrischen Wand (50) des äußeren fixen Körpers (44) montiert ist, und dass der Kranz (84) der Ausgangsstufe (40) fest mit der Nabe (86) verbunden ist.

10. Antriebsvorrichtung nach einem der Ansprüche 5 bis 9, dadurch gekennzeichnet, dass der innere fixe Körper (46) eine Querplatte (96) umfasst, an deren Innenfläche die Mittel (12) zur Verbindung des Rades (14) mit dem Fahrgestell befestigt sind.

11. Antriebsvorrichtung nach einem der vorhergehenden Ansprüche, dadurch gekennzeichnet, dass eine Bremsscheibe (28) fest mit dem Rad (14) verbunden und in Bezug auf das Rad (14) axial nach innen verschoben ist.

12. Antriebsvorrichtung nach einem der Ansprüche 5 bis 9, dadurch gekennzeichnet, dass der innere fixe Körper (46) eine Querplatte (96) umfasst, an deren Innenfläche das Gehäuse (120) einer Bremsvorrichtung (114) angeordnet ist, die zumindest eine fixe, mit dem Gehäuse (120) verbundene Scheibe (126) und eine bewegliche, mit einer Welle (116) verbundene Scheibe (122) umfasst, wobei diese Welle fest mit dem Zentralrad (76) der Ausgangsstufe (40) des Untersetzungsgetriebes (20) verbunden ist, und dass die Scheiben (122, 126) axial durch Betätigungsmittel (130, 132) zusammengedrückt werden, um eine Bremsung des Rades (14) hervorzurufen.

13. Antriebsvorrichtung nach einem der vorhergehenden Ansprüche, dadurch gekennzeichnet, dass der Motor (18) ein Elektromotor ist.

14. Antriebsvorrichtung nach einem der vorhergehenden Ansprüche, dadurch gekennzeichnet, dass eine äußere Querfläche (30) des Gehäuses (34) des Motors (18) axial annähernd auf der Höhe einer äußeren seitlichen Flanke (32) des Rades (14) angeordnet ist.

## Claims

1. A drive device for a wheel of an automobile engine, of the type in which the wheel (14) is mounted to rotate about its axis (A1) at the outer end (12) of means (10) for connection with a vehicle chassis, of the type comprising a motor (18) of which a casing (34) is rigid with the means (10) for connecting the wheel (14) with the chassis and of the type in which a speed reducer (20) which transmits the drive power between the motor (18) and the wheel (14) comprises an input stage (38) and an output stage (40) each formed by an epicyclic gear train comprising a planet wheel, a pinion carrier and an outer ring gear such that the motor (18) and the speed reducer (20) are at least partially housed in a space (22) bounded by a rim (24) of the wheel (14), characterised in that the motor (18) is arranged on the outer side, in the direction of the axis (A1), of a speed reducer (20) which is interposed axially between the motor (18) and the means (10) for the connection of the wheel (14) with the chassis.

2. A drive device as claimed in claim 1, characterised in that the casing (34) of the motor (18) is rigid with the outer ring gear (62) of the input stage (38) of the reducer (20) and the pinion carrier (42) of the output stage (40) which are fixed members, in that a drive shaft (36) of the motor (18) is connected to a planet wheel (60) of the input stage (38) of the reducer (20), in that the pinion carrier (68) of the input stage (38) is connected to the planet wheel (76) of the output stage (40) and in that the outer ring gear (84) of the output stage (40) is connected to the wheel (14).

3. A drive device as claimed in any one of claims 1 or 2, characterised in that a fixed member (46) of the reducer (20) is rigid with the means (10) for connecting the wheel (14) with the chassis.

4. A drive device as claimed in any one of the preceding claims, characterised in that the wheel (14) is mounted to rotate on a fixed member (44) of the reducer (20) by means of a roller bearing assembly (88).

5. A drive device as claimed in any one of the preceding claims, characterised in that the speed reducer (20) comprises an intermediate fixed body (42) which is mounted axially between an outer fixed body (44) and an inner fixed body (46) and in that the input stage (38) and the output stage (40) of the reducer (20) are each axially arranged between the intermediate fixed body (42) and the outer fixed body (44) and the inner fixed body (46) respectively.

6. A drive device as claimed in claim 5, characterised in that the outer fixed body (44) comprises a transverse flange (48) on an outer surface of which (52) there is fixed the casing (34) of the motor (18) and though which the planet wheel (60) of the input stage (38) is mounted to rotate, and in that it comprises a peripheral cylindrical wall (50) which extends axially inwards from the periphery of the transverse flange (48) within which the ring gear (62) of the input stage (38) is fixed, and at an inner end of which the intermediate body (42) is fixed.

7. A drive device as claimed in one of claims 5 or 6, characterised in that the pinion carrier (68) of the input stage (38) and the planet wheel (76) of the output stage (40) are connected by a connection shaft (72) which is mounted in rotation through the intermediate body (42).

8. A drive device as claimed in any one of claims 5 to 7, characterised in that the intermediate body (42) bears, on an outer surface (78), the pinions (72) of the output stage (40).

9. A drive device as claimed in any one of claims 6 to 8, characterised in that the wheel (14) comprises a hub (86) which is mounted to rotate on the peripheral cylindrical wall (50) of the outer fixed body (44) and in that the ring gear (84) of the output stage (40) is rigid with the hub (86).

10. A drive device as claimed in any one of claims 5 to 9, characterised in that the inner fixed body (46) comprises a transverse flange (96) on an inner surface of which the means (12) for the connecting the wheel (14) with the chassis are fixed.

11. A drive device as claimed in any one of the preceding claims, characterised in that a brake disk (28) is rigid with the wheel (14) and is offset axially inwards with respect to the wheel (14).

12. A drive device as claimed in any one of claims 5 to 9, characterised in that the inner fixed body (46) comprises a transverse flange (96) on an inner surface of which there is arranged the casing (120) of a braking device (114) comprising at least one disk (126) fixed in rotation connected to the casing (120) and a disk (122) moving in rotation connected to a shaft (116) which is rigid in rotation with the planet wheel (76) of the output stage (40) of the reducer (20) and in that the disks (122, 126) are axially clamped by actuation means (130, 132) in order to cause the braking of the wheel (14).

13. A drive device as claimed in any one of the preceding claims, characterised in that the motor (18) is an electric motor.

14. A drive device as claimed in any one of the preceding claims, characterised in that an outer transverse surface (30) of the casing (34) of the motor (18) is arranged axially substantially at the location of an outer lateral flank (32) of the wheel (14).
